# EUROPEAN PATENT APPLICATION

(11) **EP 4 032 863 A1**
(43) Date of publication of application: **27.07.2022**
(21) Application number: 22152470.5
(22) Date of filing: 20.01.2022
(51) Int. Cl.: C02F 1/66, C02F 1/20, C02F 1/74

(54) **APPARATUS AND METHOD FOR TREATING MUNICIPAL CLEAN WATER**

(30) Priority: 21.01.2021 FI 20215072; 04.02.2021 FI 20215122
(71) Applicant: Uponor Infra Oy, 01510 Vantaa (FI)
(72) Inventor: MÄNTY, Sakari, 01510 Vantaa (FI); SILLANPÄÄ, Ari, 01510 Vantaa (FI)
(74) Representative: Laine IP Oy

(57) **Abstract**

According to an example aspect of the present invention, there is provided an apparatus and method for treating municipal clean water by adjusting its pH, comprising a vessel having a bottom (1) and a peripheral wall (2) defining a volume, an infeed trough (10) within the peripheral wall (2), the infeed trough (10) comprising an inlet for raw water (14) and a first overflow edge (11) with at least one overflow passage (12) and an aeration spoiler (13) set below the overflow passage (12) for interrupting the water flow from the overflow passage.

## Description

### FIELD

This invention relates to treating water before it is supplied to municipal clean water network, domestic houses, factories or other users. More particularly, the invention relates to adjusting the pH of the water, In particular, the invention relates to alkalizing acidic water before use as municipal clean water.

### BACKGROUND

Raw water obtained, for example in Finland and Scandinavia may be naturally acidic, like groundwater in Finland usually is. Acidity causes problems in water networks as acidity corrodes pipelines and fittings. This causes increased need of maintenance and may even lead to leakages and failures of the lines. The corrosion also erodes material of the pipes and fittings and releases heavy metals to the water. High contents of heavy metals such a s copper may cause health problems and decrease the suitability of the water to industrial use. Water is considered acidic when pH is below 6,5 and corrosive when pH is below 6.

Water becomes acidic when it combines with carbon dioxide during the process of precipitation. When the clouds return the water back to the earth's surface in the form of precipitation, like rain and snow, carbon dioxide (CO2) dissolves into the rainfall. This forms a weak carbonic acid and lends water a mild acidity. The average pH of rainwater is around 5.6. When it hits the earth and seeps through layers of rock and sediment, the pH will adjust depending upon the environmental conditions it encounters. If the rain is falling on calcium-rich limestone, it will absorb high mineral content and likely become hard water. However, if it seeps through a rock bed of something like granite, the water will stay acidic. Metamorphic and igneous rocks lack the calcium to buffer the pH and neutralize the acid in the water. This means many wells are likely to have acidic water, as they are often accessing shallow groundwater for their water supplies.

The corrosiveness of water can be reduced by using limestone (calcium carbonate, calcium-magnesium carbonate or dolomite) treatment that neutralizes carbon dioxide. Aeration removes excess carbon dioxide and increase the pH. Further, alkalizing chemicals may be added to the water. The choice of a suitable method depends from the capacity needed, properties of the raw water and costs. Range of apparatuses and methods currently available starts form apparatuses for individual domestic houses to large scale industrial systems for cities and industrial plants.

### SUMMARY OF THE INVENTION

The invention relates to adjusting pH of water by using limestone treatment and aeration. The invention uses overflow of water from defined locations to aeration spoilers located below the overflow locations. Aerated water may be treated with limestone by letting the water flow through a limestone crush layer.

The invention is defined by the features of the independent claims. Some specific embodiments are defined in the dependent claims.

According to a first aspect of the present invention, there is provided an apparatus for treating water by adjusting its pH, comprising a vessel having a bottom and a peripheral wall defining a volume, an infeed trough within the peripheral wall, the infeed trough comprising an inlet for raw water and a first overflow edge with at least one overflow passage and an aeration spoiler set below the overflow passage for dispersing the water flow from the overflow passage.

According to a second aspect of the present invention, there is provided a method for treating water by adjusting its pH, comprising feeding raw water to an infeed trough so that the raw water passes from the trough over a first overflow edge through at least one overflow passage falling on an aeration spoiler set below the overflow passage.

According to a third aspect of the invention the peripheral wall forms one of the walls of the infeed trough (10).

According to a fourth aspect of the invention, the infeed trough is formed of a first partition wall extending inwards to the vessel from the perimeter wall and the first overflow edge extends upwards from first partition wall at a distance from the perimeter wall and delineates an opening surrounded by the overflow edge.

According to a fifth aspect of the invention, the aeration spoilers are longitudinal strips extending from the overflow edge.

According to a sixth aspect of the invention, the aeration strips are longitudinal strips having at least partially three dimensional form on the area where the water flow is intended to hit, the form being preferably concave of convex.

According to seventh aspect of the invention the aeration spoiler is formed of at least one of the group: wire mesh, wire net, perforated plate, saw tooth plate, annular ring or annular plate.

According to a eigth aspect of the invention, the vessel comprises a volume of limestone below the first partition wall and a collection pipes over the bottom and an outlet for treated water connected to the collection pipes.

According to a ninth aspect of the invention, the collection pipes comprise an inlet for washing water connected to the collection pipes.

According to a tenth aspect of the invention, the collection pipes comprise an inlet for rinsing air.

According to an eleventh aspect of the invention, the apparatus comprises an outflow trough below the infeed trough, the outflow trough comprising a second partition wall, a second overflow edge and an outflow pipe for removing water collected in the outflow trough.

According to a twelfth aspect of the invention, the second overflow edge comprises weirs or protrusions.

### BRIEF DESCRIPTION OF THE DRAWINGS

FIGURE 1 illustrates in a cross section and apparatus in accordance with at least some embodiments of the present invention;
FIGURE 2 depicts a detail of FIGURE 1;
FIGURE 3 illustrates the example apparatus of FIGURE 1 capable of supporting at least some embodiments of the present invention.

### EMBODIMENTS

### DEFINITIONS

In the present context, the term "limestone" comprises solid materials that are soluble to acidic water and increase the pH of water contacting the material, such as limestone, minerals containing calcium carbonate or calcium-magnesium carbonate or dolomite and similar compounds used for treating acidic water. Usually the limestone is used as a crush or in otherwise particulate form to allow water to flow through the limestone mass or layer.

Municipal water includes but is not limited to water for domestic use, industry and irrigation.

The purpose of the invention is to provide an apparatus for reducing acidity in water, i.e. to increase pH. As the acidity in municipal raw water is mostly caused by carbon dioxide content of water, aeration is used to remove carbon dioxide. Aeration may be combined with limestone treatment wherein water is passed through a volume of crushed limestone. The aeration is done by controllably overflowing water over a first overflow edge so that it falls on aeration spoilers that sprinkle the water flow to smaller flows and drops that increase the contact surface of the flow, whereby excess carbon dioxide is removed. The sprinkled water may then flow on a volume of limestone to further decrease the amount of carbon dioxide by reacting it with the limestone. Some setups for piping arrangements of the apparatus capable of supporting at least some embodiments of the invention are also presented.

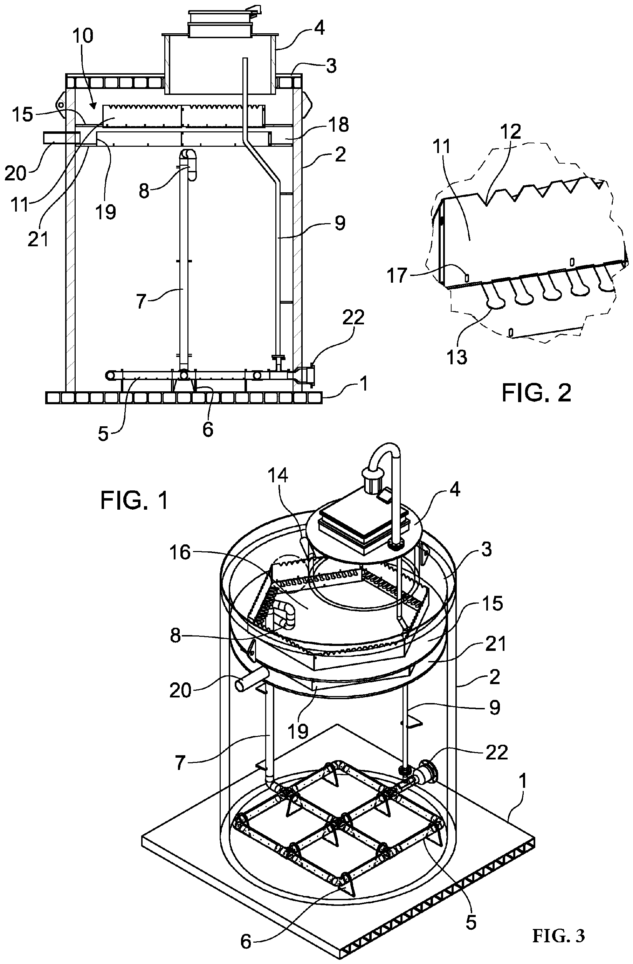

FIGURE 1 illustrates a water treatment apparatus in accordance with at least some embodiments of the present invention. The apparatus has a vessel defining a volume by a bottom 1, a peripheral wall 2 and a roof 3. The roof 3 has a manhole 4 for maintenance and access to inside the vessel. On top of the bottom 1 inside the vessel is a piping system for performing various functions of the apparatus. These collection pipes 5 are perforated tubes connected to each other to form a grid. The form of the grid, cross section of the pipes and the amount of individual pipes may be designed according to the size and form of the apparatus. The collection pipes 5 are supported on the bottom on studs 6 at a distance. This aids to prevent eroded particles and debris blocking the perforations in the collection pipes 5. An outlet for treated water 7 is also connected to the collection pipes 5. The outlet for treated water 7 is a pipe extending upwards from the collection pipes 5 and ending to a swan neck 8 that exits outside the vessel through the perimeter wall 2. The height of the swan neck 8 defines the level of water in the vessel during operation. One further pipe connected to the collection pipes 5 is an inlet for rinsing air 9. The inlet for rinsing air 9 extends from the collection pipes 5 to the manhole 4. The inlet for rinsing air 9 can be connected to a source for pressurized air at the manhole for cleaning the apparatus. Further, an inlet for cleaning water 22 is connected to the collection pipes 5.

At a distance from the top edge of the perimeter wall 2 and the underside of the roof 3 is an aeration system. The aeration system comprises an infeed trough 10 comprising an inlet for raw water 14 and a first overflow edge 11 with at least one overflow passage 12. The first overflow edge 11 is mounted on an edge of a first partition wall 15 that is connected to the inner surface of the peripheral wall 2. The first overflow edge 11 extends upwards from the first partition wall and delineates the infeed trough 10 with the inner surface of the peripheral wall 2. The inlet for raw water 14 opens to this infeed trough 10. At the centre of the infeed trough 10 is an opening 16. The edge of the first partition wall 15 and the first overflow edge 11 form the edge of the opening 16. The opening 16 allows access to the inside of the apparatus for eventual care and maintenance.

In this example the first overflow edge 11 is made of six rectangular pieces that are fitted on the edge of the first partition wall 15. Thus, the opening 16 is hexagonal. This form is advantageous as the rectangular pieces are easy to manufacture, for example of sheet metal. Of course, other forms such as quadrangular or circular may be used if so desired. The first overflow edge 11 may be formed as one piece or of multiple pieces, but making the first overflow edge 11 of separate pieces provides some benefits described below. Similarly, the peripheral wall 2 of the vessel may be circular as shown or polygonal or have any desired shape. However, circular tubes and polygons are usually most easy to manufacture.

FIGURE 2 shows the first overflow edge 11 enlarged. Each section of the overflow edge 11 comprises mounting holes 17. These mounting holes 17 are slightly elongated. In this way the position of each section of the first overflow edge 11 may be adjusted. This function may be needed as the apparatus is usually set on the ground or on a bottom of a well. The ground surface may be slightly off-level or otherwise uneven. This can be compensated by said adjustment to set the first overflow edge 11 on level position in order to provide an even flow over the first overflow edge 11 all way round the perimeter of the opening 16. The adjustment may be provided for overflow edges made of single piece of material also. The upper edge of the first overflow edge 11 comprises multiple overflow passages 12. These have a V-shape opening towards the edge of the first overflow edge 11. The V-shape has a benefit that the cross section enlarges upwards so the flow volume over the overflow passages 12 increases rapidly if the water level in the infeed trough 10 rises. As there are multiple overflow passages 12 at the first overflow edge 11, increasing flow capacity prevents flow of water over the edge and keeps the flow at overflow passages 12. The overflow passages may have various shapes, for example an upwards opening shape, such as V-shape, U-shape or weir shape. This concentration of flow to overflow passages 12 is utilized for aeration. At each overflow passage is 12 is an aeration spoiler 13 set below the overflow passage 12. The purpose of the aeration spoiler 13 is to interrupt the water flow from the overflow passages 12. Now, when water flows through the overflow passagel2, it falls on the aeration spoiler 13 and sprinkles off the aeration spoiler 13 and falls further down on the water surface in the vessel. This action removes carbon dioxide from the water and reduces acidity. The purpose of the aeration spoilers is to interrupt and disperse the flow of water falling from the overflow passages. This can be done in several ways. The spoon form shown in the drawings may be dimensioned so that the stem of the spoon and the falling height from the overflow edge are matched so that the flow hits the widened end of the spoon. This provides good spread of the water hitting the end of the spoon. The aeration spoilers may be such longitudinal strips extending from the overflow edge and possible having different forms of stems and ends. The aeration strips may be formed as longitudinal strips having at least partially three dimensional form on the area where the water flow is intended to hit. The form is preferably concave of convex, but various ridges, grooves, indentations and protrusions can be used instead or in addition to produce a desired spreading pattern for the dispersed water.

However, alternate solutions may be found, for example one of the group or combinations thereof: wire mesh, wire net, perforated plate, saw tooth plate, annular rings or plates of different cross sections. These can be equipped with three dimensional spreading patterns as desired. This example utilizes multiple overflow passages. It can be contemplated that only one overflow passage and one aeration spoiler is used, but then aeration capacity is understandably limited. The V-shape of the overflow passage has benefits, but any other form concentrating a flow to a certain location may be used. The apparatus of FIGURES 1 - 3 comprises also a removal system for cleaning water. This is formed as outflow trough 18. The outflow trough 18 comprises a second partition wall 21, a second overflow edge, i.e. outflow overflow edge 19 and an outlet for cleaning water 20. The structure of the outflow trough 18 may be similar to the infeed trough 10. Weir shape is one constructional option but overflow passages on the edge of the outflow overflow edge are not always needed. The outflow overflow edge 19 may comprise weirs or protrusions.

The apparatus described above operates as follows: for alkalizing or adjusting the pH of raw water, raw water is fed into the vessel through inlet for raw water 14. The water flow enters the infeed trough 10. The water flow is diverted by the wall on the first overflow edge 11 and further turbulence is caused by polygonal form of the first overflow edge 11. This slows down the speed of the flow and aids to keep the water level in the infeed trough 10 steady and level. Of course, multiple inlets, baffles and other conventional means may be uses for controlling the speed of the water flow. When the level of water rises to the height of the overflow passages 12, water jets exit from the overflow passages and fall on the aeration spoilers 13. This action removes carbon dioxide. From the aeration spoilers 13 the water falls on the surface of the water in the vessel. The level of the water in the vessel is set by the outlet for treated water 7, either directly or by a swan neck 8, as in FIGURES 1 and 3. The vessel contains a volume of limestone and the aerated water flows through this volume. As the water flows through the limestone, it contacts limestone particles multiple times and carbon dioxide and possible other acidic substances react with the limestone. Alkalised or treated water is collected at the bottom of the vessel by collection pipes 5, wherefrom it flows out from the vessel via the outlet for treated water 7.

The volume of limestone may require cleaning at certain intervals. For this purpose, the outlet for treated water 7 is closed and inlet for cleaning water 22 is opened for feeding cleaning or washing water flow through the collection pipes 5 to the bottom of the vessel. This forms a counterflow upwards in the vessel and trough the volume of limestone. As the water level rises over outflow overflow edge 19, debris collected in the limestone is washed through the outflow trough 18 and outlet for cleaning water 20. The cleaning action may be enhanced by feeding air through the collection pipes 5 to the vessel. This is done by inlet for rinsing air 9 the is connected to the collection pipes 5.

The collection pipes 5 combine several functions of the apparatus, namely collection of treated water, infeed of cleaning water and infusion of rinsing air. Because the collection pipes combine several actions, a simple construction is provided.

The infeed trough 10 and outflow trough 21 may be also circular or polygonal rings set within the vessel so that a gap is formed between the inner surface of the peripheral wall and the trough. Also, two or more separated troughs may be used, for example rectangular, circular or other forms of basins or reservoirs including an overflow edge as described above. However, it is advantageous that an opening is provided for access past the infeed and outflow troughs.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention can be utilized for treating municipal water.

### REFERENCE SIGNS LIST

- 1: bottom
- 2: peripheral wall
- 3: roof
- 4: manhole
- 5: collection pipes
- 6: studs
- 7: outlet for treated water
- 8: swan neck
- 9: inlet for rinsing air
- 10: infeed trough
- 11: first overflow edge
- 12: overflow passage
- 13: aeration spoiler
- 14: inlet for raw water
- 15: first partition wall
- 16: opening
- 17: mounting holes
- 18: outflow trough
- 19: outflow overflow edge
- 20: outlet for cleaning water
- 21: second partition wall
- 22: inlet for cleaning water

## Claims

1. An apparatus for treating water by adjusting its pH and/or alkalinity, comprising a vessel having a bottom (1) and a peripheral wall (2) defining a volume, an infeed trough (10) within the peripheral wall (2), the infeed trough (10) comprising an inlet for raw water (14) and a first overflow edge (11) with at least one overflow passage (12) and at least one aeration spoiler (13) set below the overflow passage (12) for dispersing the water flow from the overflow passage.

2. An apparatus according to claim 1, wherein the peripheral wall (2) forms one of the walls of the infeed trough (10).

3. An apparatus according to claim 2, wherein the infeed trough (10) is formed of a first partition wall (15) extending inwards to the vessel from the peripleral wall (2) and the first overflow edge (11) extends upwards from the first partition wall (15) at a distance from the perimeter wall (2) and delineates an opening (16) surrounded by the overflow edge (11).

4. An apparatus according to one of the claims 1 - 3, wherein the aeration spoilers (13) are longitudinal strips extending from the overflow edge (11).

5. An apparatus according to the claim 4, wherein the aeration spoilers (13) are longitudinal strips having at least partially three dimensional form on the area where the water flow is intended to hit, the form being preferably concave of convex.

6. An apparatus according to one of the claims 1 - 3, wherein the aeration spoiler (13) is formed of at least one or combination of the group: wire mesh, wire net, perforated plate, saw tooth plate, annular ring or annular rings of different cross sections.

7. An apparatus according to one of the claims 1 - 6, wherein the vessel comprises a volume of limestone below the first partition wall (15) and collection pipes (5) over the bottom (1) and an outlet for treated water (7) connected to the collection pipes (5).

8. An apparatus according to one of the claims 1 - 7, wherein the collection pipes (5) comprise an inlet for washing water (22) connected to the collection pipes (5).

9. An apparatus according to one of the claims 1 - 7, wherein the collection pipes (5) comprise an inlet for rinsing air (9).

10. An apparatus according to one of the claims 1 - 9, wherein the apparatus comprises an outflow trough (18) below the infeed trough (10), the outflow trough (18) comprising a second partition wall (21), a outflow overflow edge (19) and an outflow pipe (20) for removing water collected in the outflow trough (18).

11. An apparatus according to any of the claims 1 - 10, wherein the first overflow edge (11) comprises several sections.

12. An apparatus according to any of the claims 1 - 10, wherein the overflow edge comprises multiple overflow passages having an upwards opening shape, such as V-shape, U-shape or weir shape.

13. A method for treating water by adjusting its pH and/or alkalinity, comprising feeding raw water to an infeed trough (10) so that the raw water passes from the infeed trough (10) over a first overflow edge (11) through at least one overflow passage (12) falling on an aeration spoiler (13) set below the overflow passage (12).
